# EUROPÄISCHE PATENTANMELDUNG

(11) **EP 4 597 061 A1**
(43) Veröffentlichungstag der Anmeldung: **06.08.2025**
(21) Anmeldenummer: 25154618.0
(22) Anmeldetag: 29.01.2025
(51) Int. Cl.: G01L 1/24

(54) **DRUCKMESSVORRICHTUNG UND VERFAHREN ZUR DRUCKMESSUNG**

(30) Priorität: 31.01.2024 DE 102024102692
(71) Anmelder: Ph-Instruments GmbH, 9800 Spittal a.d. Drau (AT)
(72) Erfinder: FERDIGG, Raffael, 9500 Villach (AT); HOFMANN, Peter, 9712 Fresach (AT)
(74) Vertreter: Müller, Thomas

(57) **Zusammenfassung**

Die vorliegende Erfindung betrifft eine Druckmessvorrichtung (10), sowie ein Verfahren zur Druckmessung mittels einer solchen Druckmessvorrichtung (10). Die Druckmessvorrichtung (10) weist eine Druckmesseinrichtung (11) auf, wobei die Druckmesseinrichtung (11) einen Rotationskörper (14) aufweist. Weiterhin weist die Druckmessvorrichtung (10) eine Einrichtung (16) zur Erzeugung einer Rotation des Rotationskörpers (14) mit einem definierten Rotationsfrequenzbereich auf. Die Druckmesseinrichtung (11) kann als Gasreibungsmanometer (11a) ausgebildet sein. Um die Performance der Druckmessvorrichtung (10), zu verbessern, ist erfindungsgemäß realisiert, dass die Erzeugungseinrichtung (16) als Einrichtung zur Erzeugung einer Rotation des Rotationskörpers (14) mit einem Rotationsfrequenzbereich von kleiner 400 Hz bereitgestellt ist.

## Beschreibung

Die vorliegende Erfindung betrifft zunächst eine Druckmessvorrichtung. Weiterhin betrifft die Erfindung auch ein Verfahren zur Druckmessung mittels einer Druckmessvorrichtung.

Eine Druckmessvorrichtung ist insbesondere eine Vorrichtung, mittels derer ein Druck, beispielsweise auch die Druckverhältnisse, ermittelt, beispielsweise gemessen oder bestimmt, wird/werden. Die Druckmessvorrichtung weist eine Anzahl unterschiedlicher Komponenten auf, die im weiteren Verlauf der Beschreibung erläutert werden.

Druckmessvorrichtungen an sich sind auf vielfältige Weise im Stand der Technik bekannt und werden für unterschiedlichste Einsatzzwecke verwendet. Die vorliegende Erfindung ist in bevorzugter Ausführung im Bereich der Vakuum-Prozess-, Mess- und/oder -Regelung angesiedelt, jedoch nicht darauf beschränkt.

Aufgabe der vorliegenden Erfindung ist es, die Performance einer solchen Druckmessvorrichtung weiter zu verbessern.

Diese Aufgabe wird erfindungsgemäß gelöst durch die Druckmessvorrichtung mit den Merkmalen gemäß dem unabhängigen Patentanspruch 1, welche den ersten Aspekt der Erfindung darstellt, sowie durch das Verfahren mit den Merkmalen gemäß dem unabhängigen Patentanspruch 11, welches den zweiten Aspekt der Erfindung darstellt. Weitere Merkmale und Details der Erfindung ergeben sich aus den Unteransprüchen, aus der Beschreibung sowie aus den Zeichnungen. Dabei gelten Merkmale und Details, die im Zusammenhang mit der erfindungsgemäßen Druckmessvorrichtung beschrieben sind, selbstverständlich vollinhaltlich auch im Zusammenhang mit dem erfindungsgemäßen Verfahren, und umgekehrt, so dass die Offenbarung zur Druckmessvorrichtung vollumfänglich auch zur Offenbarung des Verfahrens gemacht wird, und umgekehrt.

Gemäß dem ersten Aspekt der Erfindung wird eine Druckmessvorrichtung bereitgestellt, die die Merkmale des unabhängigen Patentanspruchs 1 aufweist.

Die Druckmessvorrichtung ist insbesondere eine Unterdruck-Messvorrichtung, insbesondere eine Vakuum-Messvorrichtung. Mit der Druckmessvorrichtung kann beispielsweise der Druck in einer Unterdruckkammer, beispielsweise einer Vakuumkammer, bestimmt, etwa gemessen, werden. Die Druckmessvorrichtung kann beispielsweise den Druck in einer Kammer messen, die die Prozesskammer in einem Anwendungsprozess ist, zumindest mit einer solchen Kammer zusammenwirken.

Die Druckmessvorrichtung weist zunächst eine Druckmesseinrichtung auf. Bei der Druckmesseinrichtung handelt es sich um die eigentliche Drucksensoreinrichtung, beispielsweise eine Unterdruck-Messsensoreinrichtung, etwa eine Vakuum-Messsensoreinrichtung. Mit der Druckmesseinrichtung kann beispielsweise der Druck in einer Unterdruckkammer, beispielsweise einer Vakuumkammer, bestimmt, etwa gemessen, werden. Gemäß einer Ausführungsform ist die Druckmesseinrichtung als Druckmesseinrichtung zur hochgenauen und/oder langzeitstabilen Druckmessung ausgebildet.

Die Druckmesseinrichtung weist einen Rotationskörper auf. Der Rotationskörper dient zur Bestimmung des Drucks. Gemäß einer Ausführungsform ist der Rotationskörper in Form einer rotierenden oder rotierbaren Kugel ausgebildet. Der Rotationskörper kann aber auch anders ausgebildet sein, beispielsweise in Form eines Zylinders. Die Erfindung ist auf alle Druckmesseinrichtungen anwendbar, bei denen ein solcher Rotationskörper zum Einsatz kommt. Zur Druckmessung werden insbesondere Drehfrequenzinformationen des Rotationskörpers verwendet, wie weiter unten näher veranschaulicht wird.

Damit der Rotationskörper in Rotation versetzt werden kann, weist die Druckmessvorrichtung eine Einrichtung zur Erzeugung einer Rotationsfrequenz des Rotationskörpers auf. Diese Einrichtung, die in der Beschreibung auch als Erzeugungseinrichtung bezeichnet wird, ist derart bereitgestellt und konfiguriert, dass über deren Aktivierung der Rotationskörper auf einen definierten Rotationsfrequenzbereich beschleunigt wird, bei dem es sich insbesondere um einen Betriebsfrequenzbereich des Rotationskörpers handelt. Die Erzeugungseinrichtung stellt somit eine Art Antrieb bereit, über den der Rotationskörper in den definierten Betriebsfrequenzbereich beschleunigt und gehalten wird. Gemäß einer Ausführungsform weist die Erzeugungseinrichtung eine Einrichtung zur Erzeugung eines äußeren Drehfelds auf, oder ist als eine solche Einrichtung ausgebildet. Die Erzeugungseinrichtung des Drehfeldes befindet sich außerhalb des Rotationskörpers. Bei dem äußeren Drehfeld kann es sich beispielsweise um ein Magnetfeld, ein elektrisches Feld oder ein elektromagnetisches Feld handeln. Gemäß einer Ausführungsform handelt es sich bei dem äußeren Drehfeld um ein Magnetfeld, dass sich um eine Rotationsachse dreht. Die Erzeugungseinrichtung kann dazu beispielsweise wenigstens eine Spule, etwa eine Antriebsspule, aufweisen. Das Drehfeld wiederum sorgt dafür, dass der Rotationskörper in Rotation versetzt wird und in dem definierten Rotationsfrequenzbereich rotiert. Dazu zieht das Drehfeld den Rotationskörper mit.

Die Druckmessung mit einem solchen Rotationskörper funktioniert grundsätzlich wie folgt: Der Rotationskörper wird reibungsfrei gelagert, beispielsweise über ein Magnetfeld. Ein äußeres Drehfeld dient als Antrieb des Rotationskörpers, versetzt den Rotationskörper in Rotation und bringt den Rotationskörper in dem definierten Rotationsfrequenzbereich zum Rotieren. Dann wird der Antrieb abgeschaltet. Durch die Moleküle im Restgas wird der Rotationskörper abgebremst. Die Abnahme der Rotationsgeschwindigkeit wird gemessen und die Teilchendichte des Gases bestimmt. Die Abbremsrate kann als Maß der Dichte beziehungsweise des Drucks direkt gemessen werden.

Bislang ging man davon aus, dass bei den vorgenannten Druckmesseinrichtungen eine Signalaufnahme des Rotationskörpers, insbesondere bei induktiver Signalaufnahme, im Bereich zwischen 400 Hz und 800 Hz, oder aber darüber, erfolgen muss. Unterhalb von 400 Hz verschwindet das Signal graduell.

Die Erfinder haben nun überraschender Weise herausgefunden, dass für eine stabile, genaue und verlässliche Druckmessung auch eine Signalaufnahme des Rotationskörpers unterhalb von 400 Hz möglich ist.

Erfindungsgemäß ist die Erzeugungseinrichtung deshalb als Einrichtung zur Erzeugung einer Rotation des Rotationskörpers mit einem Rotationsfrequenzbereich von kleiner 400 Hz bereitgestellt. Das bedeutet, dass die Erzeugungseinrichtung derart bereitgestellt beziehungsweise konfiguriert ist, dass mit dieser eine Rotation des Rotationskörpers erzeugt wird, die in einem Rotationsfrequenzbereich von kleiner 400 Hz liegt. Das heißt, der Rotationskörper wird im bestimmungsgemäßen Gebrauch der Druckmessvorrichtung beziehungsweise der Druckmesseinrichtung mit einer Rotationsfrequenz von nicht mehr als 400 Hz, das heißt von nicht mehr als 400 Umdrehungen pro Sekunde, rotiert.

Gemäß einer Ausführungsform ist die Erzeugungseinrichtung als Einrichtung zur Erzeugung einer Rotation des Rotationskörpers mit einem Rotationsfrequenzbereich von kleiner 300 Hz, vorzugswiese kleiner 200 Hz, bereitgestellt. Vorzugsweise ist die Erzeugungseinrichtung als Einrichtung zur Erzeugung einer Rotation des Rotationskörpers mit einem Rotationsfrequenzbereich von 100 Hz oder kleiner, vorzugsweise 50 Hz oder im Bereich von 50 Hz, bereitgestellt.

Eine solche niedrige Rotationsfrequenz bewirkt, dass der sogenannte "Residual Drag", der auch als Restwiderstand bezeichnet werden kann, der Druckmesseinrichtung kleiner wird beziehungsweise ganz vernachlässigbar ist. Das bedeutet, dass die Druckmesseinrichtung ohne Nullabgleich bereits den gesamten spezifizierten Druckmessbereich messen kann. Ein kleinerer "Residual Drag" hat zudem auch weniger Nachbeschleunigungen der Druckmesseinrichtung zur Folge. Für eine niedrige Rotationfrequenz kann die Residual Drag Frequenz Abhängigkeit (RD(f)) verkleinert beziehungsweise ganz vernachlässigt werden. Der Residual Drag kann sich bei Abnahme der Rotationsfrequenz über die Zeit verändern. Diese Änderung ist druckunabhängig und eine für die Druckmessung, beispielsweise eine SRG Messung, "störende" Eigenschaft des Sensors. Dies ist von Rotationskörper zu Rotationskörper unterschiedlich. Für geringe Rotationsfrequenzen kann dieser Effekt, so wie der Residual Drag, minimal sein. All das resultiert unter anderem in stabilere Langzeitmessungen, und auch die Stabilität der Sensoraufhängung wird potenziell verbessert.

Gemäß einer Ausführungsform ist die Druckmesseinrichtung als Druckmesseinrichtung zur hochgenauen und/oder langzeitstabilen Druckmessung ausgebildet.

Gemäß einer Ausführungsform ist die Druckmesseinrichtung in Form eines Gasreibungsmanometers ausgebildet. Oder die Druckmesseinrichtung weist ein Gasreibungsmanometer auf, was impliziert, dass die Druckmesseinrichtung auch noch andere Komponenten aufweisen kann. Derartige Gasreibungsmanometer sind im Stand der Technik grundsätzlich bereits bekannt.

Mit einem Gasreibungsmanometer kann ein Druck, bei dem es sich nicht selten um einen Unterdruck, insbesondere um ein Vakuum handelt, sehr genau gemessen werden. Das erzeugte Druckmesssignal kann auch dazu genutzt werden, um daraus einen Korrekturfaktor zu ermitteln.

Das Gasreibungsmanometer, das auch als SRG (Spinning Rotor Gauge) bezeichnet wird, ist nicht ionisierend, arbeitet bei Umgebungstemperatur, ist weniger abhängig von Gasarten, ist weniger beschichtungssenitiv und ist vor allem sehr langzeitstabil. Das liegt insbesondere daran, da lediglich die Abnahme der Rotationsfrequenz einer sich berührungslos im Vakuum drehenden Kugel bestimmt wird. Hierbei handelt es sich um ein mathematisches Verfahren, ohne jede elektrisch, mechanisch belastete Komponente im Messbereich.

Das Gasreibungsmanometer zeichnet sich durch eine hohe Präzision und absolute Genauigkeit und/oder Langzeitstabilität aus. Weiterhin sollte es das Vakuum nicht beeinflussen, gegen die verwendeten Medien resistent und möglich verschmutzungsunempfindlich sein.

Gemäß einer Ausführungsform weist das Gasreibungsmanometer einen Rotationskörper, beispielsweise eine rotierende Kugel, auf. Ein solches Gasreibungsmanometer funktioniert grundsätzlich wie folgt: Ein Rotationskörper, etwa eine Kugel, wird in einem Magnetfeld reibungsfrei gelagert. Ein äußeres Drehfeld dient als Antrieb des Rotationskörpers, versetzt den Rotationskörper in Rotation und bringt den Rotationskörper mit der Rotationsfrequenz zum Rotieren. Dann wird der Antrieb abgeschaltet. Durch die Moleküle im Restgas wird der Rotationskörper abgebremst. Die Abnahme der Rotationsgeschwindigkeit wird gemessen und die Teilchendichte des Gases bestimmt. Das kann beispielsweise optisch oder induktiv über Abtastspulen erfolgen. Die Abbremsrate kann als Maß der Dichte beziehungsweise des Drucks direkt gemessen werden. Bei diesem Verfahren gehen nur die globalen Eigenschaften des Rotationskörpers in die Messung ein und werden mit einem Faktor hinterlegt (Kalibrierfaktor), der Rest der Anordnung ist nicht variabel oder fehlerbehaftet. Die durch das Gasreibungsmanometer bereitgestellten Druckmesswerte werden bevorzugt in Form elektrischer Signale bereitgestellt.

Das Gasreibungsmanometer ist beziehungsweise ermöglicht ein Messverfahren, das sich aktuell durch seine hohe Genauigkeit (1 % vom Messwert) sowie einen weiten (> 6 Dekaden) und bis in den Hochvakuumbereich (HV) reichenden Messbereich auszeichnet (>10 bis 1×10⁻⁷ hPa), prinzipiell aber in allen Druckbereichen arbeitet. Die Druckmesseinrichtung ist durch einen Rotationskörper, etwa eine rotierende Kugel, als Sensor sehr einfach aufgebaut, arbeitet berührungslos, ohne Durchführungen ins Vakuum oder mechanisch beanspruchte Komponenten. Alle Informationen und Wechselwirkungen erfolgen über magnetische- und elektromagnetische Kräfte ins Vakuum. Das Gasreibungsmanometer besitzt damit keine elektrisch- oder mechanisch-belasteten Komponenten und erreicht eine entsprechend hohe Langzeitstabilität (drift < 1 %/Jahr), ist zudem robust und korrosionsbeständig, beispielsweise aus Ganzmetall. Da das Messsignal auf der Veränderung der Rotationsfrequenz eines, insbesondere kugelförmigen, Körpers basiert und nicht auf Abstandsänderung oder der Ionisierung von Gasen, wird das Verfahren weit weniger von Temperatur-, Alterungs- oder Beschichtungseffekten beeinflusst. Aufgrund der Genauigkeit im Hochvakuum und der Langzeitstabilität ist das Gasreibungsmanometer in vielen Kalibrierlaboren als Transferstandard im Einsatz.

Grundsätzlich ausreichend ist es, wenn die Druckmessvorrichtung eine einzige Druckmesseinrichtung aufweist. Gemäß einer Ausführungsform weist die Druckmessvorrichtung zwei oder mehr Druckmesseinrichtungen auf, wobei vorzugsweise wenigstens eine Druckmesseinrichtung in Form eines Gasreibungsmanometers ausgebildet ist, oder ein Gasreibungsmanometer aufweist. Die andere Druckmessvorrichtung ist dann bevorzugt auf andere Weise ausgebildet.

Gemäß einer Ausführungsform weist die Druckmessvorrichtung eine Einrichtung zur Erfassung/Bestimmung charakteristischer Eigenschaften der Druckmesseinrichtung auf. Diese Einrichtung wird in der Beschreibung auch als Erfassungseinrichtung bezeichnet. Insbesondere weist die Druckmessvorrichtung eine Einrichtung zur Erfassung der Rotationsfrequenz des Rotationskörpers auf. Diese Erfassungseinrichtung hat die Funktion, die Rotationsfrequenz des Rotationskörpers zu erfassen, beispielsweise direkt oder indirekt, beispielsweise zu messen, zu bestimmen, zu berechnen, oder dergleichen. Das von der Erfassungseinrichtung erfasste Rotationssignal des Rotationskörpers wird gemäß einer Ausführungsform weiterverarbeitet. Die Erfassungseinrichtung kann Bestandteil der Druckmesseinrichtung sein.

Die Erfassungseinrichtung zur Erfassung/Bestimmung charakteristischer Eigenschaften der Druckmesseinrichtung kann auf unterschiedliche Weise ausgebildet sein und fungieren. Im Folgenden werden hierzu einige Ausführungsbeispiele beschrieben, wobei die Erfindung selbstverständlich nicht auf die genannten Beispiele beschränkt ist.

Charakteristische Eigenschaften der Druckmesseinrichtung sind insbesondere solche Eigenschaften, die das Verhalten der Druckmesseinrichtung oder aber von Bestandteilen der Druckmesseinrichtung, oder aber das Einwirken von inneren und äußeren Einflüssen, während des bestimmungsgemäßen Gebrauchs der Druckmesseinrichtung, insbesondere zur Ermittlung von Druckwerten, beschreiben. Es handelt es sich insbesondere um solche Eigenschaften, die für die Bestimmung des Drucks herangezogen werden und/oder aus denen der Druck ermittelt wird.

Dies soll anhand eines Beispiels verdeutlicht werden. Beispielsweise kann die Druckmesseinrichtung einen Rotationskörper aufweisen, der mit einer Rotationsfrequenz rotiert. Bei der Rotation beziehungsweise der Rotationsfrequenz handelt es sich dann um eine charakteristische Eigenschaft der Druckmesseinrichtung. Die vorgenannte Erfassungseinrichtung ist dann beispielsweise eine Einrichtung zur Erfassung/Bestimmung der Rotationsfrequenz des Rotationskörpers. Diese Einrichtung hat die Funktion, die Rotationsfrequenz des Rotationskörpers zu erfassen, beispielsweise direkt oder indirekt, beispielsweise zu messen, zu bestimmen, zu berechnen, oder dergleichen. Das von der Einrichtung erfasste Rotationssignal des Rotationskörpers wird gemäß einer Ausführungsform weiterverarbeitet, so dass daraus Signale, insbesondere elektrische Signale entstehen, aus denen wiederum Druckwerte ermittelt, beispielsweise verrechnet werden. Beispiele hierzu im weiteren Verlauf beschrieben.

Die charakteristischen Eigenschaften werden erfasst, das heißt beispielsweise direkt aufgenommen, gemessen, oder dergleichen, oder aber bestimmt. Im letztgenannten Fall werden die charakteristischen Eigenschaften beispielsweise indirekt ermittelt, etwa aus anderen Werten hergeleitet, berechnet oder dergleichen.

Die Erfassungseinrichtung zur Erfassung/Bestimmung charakteristischer Werte der Druckmesseinrichtung kann in einer Ausführungsform Bestandteil der Druckmesseinrichtung sein. Oder die Erfassungseinrichtung ist der Druckmesseinrichtung zugeordnet. Das heißt, die Einrichtung ist eine eigenständige Komponente, die mit der Druckmesseinrichtung zusammenwirkt, das heißt zusammenarbeitet. In diesem Fall ist die Erfassungseinrichtung beispielsweise räumlich getrennt von der Druckmesseinrichtung, wirkt aber mit dieser zusammen.

Gemäß einer Ausführungsform ist die Erfassungseinrichtung als eine optische Einrichtung ausgebildet. Mit einer optischen Signalaufnahme kann sehr gut und sehr genau bei den erfindungsgemäßen niedrigen Rotationsfrequenzen von kleiner 400 Hz gemessen werden. Gemäß dieser Ausführungsform ist die Erfassungseinrichtung als eine optische Einrichtung zur Erfassung/Bestimmung charakteristischer Werte der Druckmesseinrichtung ausgebildet. Das optische System wird hier verwendet, um die Drehfrequenzinformationen beziehungsweise Rotationsfrequenzinformationen bezüglich des Rotationskörpers zu ermitteln.

Die optische Erfassungseinrichtung zeichnet sich insbesondere dadurch aus, dass sie sich die Ausbreitung von Licht und dessen Wechselwirkung mit der Druckmesseinrichtung, zumindest mit einzelnen Komponenten der Druckmesseinrichtung zunutze macht. Die optische Einrichtung weist dazu verschiedene Komponenten auf, die anhand von Ausführungsbeispielen weiter unten näher beschrieben werden.

Gemäß einer Ausführungsform weist die Druckmesseinrichtung eine solche optische Einrichtung auf. Das heißt, die Druckmesseinrichtung kann neben der optischen Einrichtung auch noch andere Komponenten zur Erfassung/Bestimmung charakteristischer Werte der Druckmesseinrichtung aufweisen.

Gemäß einer Ausführungsform ist die optische Erfassungseinrichtung zur Erfassung/Bestimmung charakteristischer Eigenschaften der Druckmesseinrichtung eine Einrichtung zur Erfassung/Bestimmung der Rotationsfrequenz des Rotationskörpers. Diese Einrichtung hat die Funktion, die Rotationsfrequenz des Rotationskörpers zu erfassen, beispielsweise direkt oder indirekt, beispielsweise zu messen, zu bestimmen, zu berechnen, oder dergleichen. Das von der Einrichtung erfasste Rotationssignal des Rotationskörpers wird gemäß einer Ausführungsform weiterverarbeitet, um daraus Druckwerte bereitzustellen, wie weiter unten noch näher beschrieben wird.

Wenn die Erfassung/Bestimmung charakteristischer Werte der Druckmesseinrichtung, beispielsweise der Rotationsfrequenz des Rotationskörpers, und die Erzeugung der Drehfrequenzinformationen, optisch, das heißt mit Hilfe eines optischen Verfahrens, erfolgt, können Informationen auch über lange Distanzen störungsfrei transportiert werden, oftmals, ohne dass die Signale zusätzlich verstärkt werden müssen. Optische Systeme bestehen insbesondere aus einer Strahlungsquelle als Sender, die das Prüfobjekt, beispielsweise den Rotationskörper, mit einem speziellen, definierten optischen Signal beaufschlagt, und einer das optische Signal aufzeichnenden Empfangseinheit als Empfänger.

Es können auch weitere optische Systeme, oder das gleiche optische System zur Erfassung/Bestimmung anderer charakteristischer Werte der Druckmesseinrichtung ausgebildet oder bereitgestellt sein oder verwendet werden. Im Folgenden werden einige Beispiele genannt. Beispielsweise kann die magnetische Aufhängung, beispielsweise die Position des Rotationskörpers in allen drei kartesischen Koordinaten, erfasst werden. Die aktive Kraftübertragung auf den Körper würde hier immer noch durch Spulen oder dergleichen erfolgen, aber die Positionserfassung und die Regelung wird durch das optische System bestimmt und gespeist. Selbstverständlich ist die Erfindung nicht auf das genannte Beispiel beschränkt.

Gemäß einer anderen Ausführungsform ist die Erfassungseinrichtung zur Erfassung/Bestimmung charakteristischer Eigenschaften der Druckmesseinrichtung als eine induktive Einrichtung ausgebildet. Das bedeutet, die charakteristischen Eigenschaften, beispielsweise die Rotationsfrequenz des Rotationskörpers, werden induktiv ermittelt. Zur Übertragung der Drehfrequenzinformation des Rotationskörpers wird ein induktives Signal verwendet. Bei der induktiven Ermittlung entsteht in der Regel eine Signalperiode pro Umdrehung des Rotationskörpers. Über die Zeit hat das Signal einen sinusförmigen oder annähernd sinusförmigen Verlauf. Aus dem zeitlichen Abstand zwischen zwei Signalen, der in der Regel dem zeitlichen Abstand zwischen zwei Nulldurchläufen des Signals entspricht, wird dann der Druck bestimmt, beispielsweise mittels eines geeigneten Algorithmus errechnet. Hierfür kommt beispielsweise wenigstens eine Spule, etwa eine Signalspule, zum Einsatz. Es handelt sich um eine Spule für die induktive Abtastung. Bei einer erfindungsgemäßen Rotationsfrequenz von kleiner 400 Hz können anstelle von Spulen alternativ oder zusätzlich auch andere induktive Detektoren verwendet werden. beispielsweise Magnetsensoren, etwa anisotrope magneto-resistive Sensoren (AMR-Sensoren. Auch kann die Anordnung der Spule(n) variiert werden. Beispielsweise kann anstelle einer Spulenanordnung eine Zentralspule verwendet werden.

Gemäß einer Ausführungsform weist die Druckmesseinrichtung ein Messrohr auf. In diesem Messrohr erfolgt die eigentliche Druckmessung. Das Messrohr ist mit einem Ende mit einem weiteren Bauteil, beispielsweise einer Vakuumkammer, einer Prozesskammer, oder dergleichen, verbunden. Der Rotationskörper ist innerhalb des Messrohrs rotierbar angeordnet.

Das Messrohr besteht nicht selten aus Metall. Kommt eine optische Erfassungseinrichtung zum Einsatz, bedeutet dies, dass eine optische Strahlung, beispielsweise Licht, auf den im Messrohr befindlichen Rotationskörper gerichtet wird und auf dessen Oberfläche auftreffen muss. Die optische Strahlung wird aber außerhalb des Messrohrs erzeugt. In diesem Fall weist das Messrohr gemäß einer Ausführungsform einen für optische Strahlung durchlässigen Bereich auf. Über diesen Bereich wird die optische Strahlung in das Messrohr eingekoppelt. Von der Oberfläche des Rotationskörpers zurück reflektierte optische Strahlung wird über den für optische Strahlung durchlässigen Bereich ausgekoppelt. Bei dem für optische Strahlung durchlässigen Bereich handelt es sich beispielsweise um einen transparenten und/oder lichtdurchlässigen Bereich, etwa ein Fenster, der aus Glas bestehen kann. Das Fester kann beispielsweise mit dem Messrohr verpresst sein. Gemäß einer Ausführungsform befindet sich der für die optische Strahlung durchlässige Bereich an/in einem geschlossenen Ende des Messrohrs, beispielsweise an/in einer Stirnseite des Messrohrs.

Gemäß einer Ausführungsform weist die optische Erfassungseinrichtung einen optischen Emitter auf, der zur Erzeugung und/oder Abstrahlung einer optischen Strahlung bereitgestellt ist. Zu diesem Zweck ist der optische Emitter als eine Strahlungsquelle ausgebildet, oder er weist eine Strahlungsquelle auf. In einer Ausführungsform handelt es sich bei der optischen Strahlung um Licht, so dass der optische Emitter eine Lichtquelle ist oder aufweist. Bei dem optischen Emitter handelt es sich gemäß einer Ausführungsform um eine Lasereinrichtung, oder er weist eine Lasereinrichtung auf. Die vom optischen Emitter erzeugte optische Strahlung trifft auf der Oberfläche des Rotationskörpers auf. Befindet sich der Rotationskörper innerhalb eines Messrohrs, wird die vom optischen Emitter bereitgestellte optische Strahlung bevorzugt über den für optische Strahlung durchlässigen Bereich des Messrohrs in das Messrohr eingekoppelt.

Gemäß einer Ausführungsform weist die optische Erfassungseinrichtung eine erste Leitungseirichtung auf, oder sie wirkt mit einer solchen ersten Leitungseinrichtung zusammen, wobei die erste Leitungseinrichtung derart bereitgestellt ist, dass sie in der Lage ist, optische Strahlung, beispielsweise Lichtstrahlung, etwa Laserstrahlung, vom optischen Emitter zu einem Prüfobjekt der Druckmesseinrichtung, beispielsweise zum Rotationskörper, zu transportieren. In der optischen Einrichtung wird die optische Strahlung erzeugt, beispielsweise über den optischen Emitter, und über die erste Leitungseinrichtung zum Prüfobjekt der Druckmesseinrichtung übertragen, wo sie auf dem Prüfobjekt auftrifft. Von dem Prüfobjekt, beispielsweise dem Rotationskörper, wird die optische Strahlung zumindest teilweise reflektiert. Durch die erste Leitungseinrichtung ist der optische Emitter räumlich von der Druckmesseinrichtung getrennt. Die erste Leitungseinrichtung kann beliebig lang sein, beispielsweise zwischen einigen Zentimetern und vielen Metern.

Gemäß einer Ausführungsform weist die optische Erfassungseinrichtung zur Erfassung/Bestimmung charakteristischer Eigenschaften der Druckmesseinrichtung einen optischen Detektor auf. Der optische Detektor ist zur Erfassung von optischer Strahlung, insbesondere von Lichtstrahlung, etwa von Laserstrahlung, bereitgestellt. Bei der erfassten optischen Strahlung handelt es sich insbesondere um von dem Prüfobjekt, beispielsweise dem Rotationskörper, reflektierte optische Strahlung. Befindet sich der Rotationskörper innerhalb eines Messrohrs, wird die von der Oberfläche des Rotationskörpers reflektierte optische Strahlung bevorzugt über den für optische Strahlung durchlässigen Bereich des Messrohrs aus dem Messrohr ausgekoppelt. Die vom Rotationskörper reflektierte optische Strahlung wird vom optischen Detektor empfangen und in diesem weiterverarbeitet, wie weiter unten in größerem Detail beschrieben wird.

Gemäß einer Ausführungsform weist die optische Erfassungseinrichtung eine zweite Leitungseirichtung auf, oder sie wirkt mit einer solchen zweiten Leitungseinrichtung zusammen, wobei die zweite Leitungseinrichtung derart bereitgestellt ist, dass sie in der Lage ist, optische Strahlung, beispielsweise Lichtstrahlung, etwa Laserstrahlung, vom Prüfobjekt der Druckmesseinrichtung, beispielsweise vom Rotationskörper, zum optischen Detektor zu transportieren. Hierbei handelt es sich insbesondere um vom Prüfobjekt zurück reflektierte optische Strahlung, die, nachdem sie in der optischen Einrichtung erzeugt und über die erste Leitungseinrichtung zum Prüfobjekt der Druckmesseinrichtung übertragen wurde, wo sie auf dem Prüfobjekt auftrifft, von dem Prüfobjekt zumindest teilweise reflektiert wird. Durch die zweite Leitungseinrichtung ist der optische Detektor räumlich von der Druckmesseinrichtung getrennt. Die erste Leitungseinrichtung kann beliebig lang sein, beispielsweise zwischen einigen Zentimetern und vielen Metern.

Der optische Emitter und der optische Detektor befinden sich gemäß einer Ausführungsform beabstandet zur Druckesseinrichtung. Der Emitter und der Detektor können in räumlicher Nähe zueinander bereitgestellt sein, beispielsweise nebeneinander. Natürlich können Sie auch beabstandet voneinander an unterschiedlichen Orten bereitgestellt sein. Die Erfindung ist diesbezüglich nicht auf bestimmte Anordnungsvarianten beschränkt. Diese ergeben sich vielmehr nach den jeweiligen Bedingungen, sowohl räumlicher als auch operativer Art, unter denen die Druckmessvorrichtung zum Einsatz kommt.

Gemäß einer Ausführungsform befindet/befinden sich der optische Emitter und/oder der optische Detektor in der Umgebung des Messrohrs, beispielsweise direkt vor beziehungsweise hinter dem für die optische Strahlung durchlässigen Bereich des Messrohrs. In diesem Fall ist ein erster und/oder zweiter Leitungsabschnitt nicht erforderlich.

Gemäß einer Ausführungsform handelt es sich bei der ersten Leitungseinrichtung und/oder bei der zweiten Leitungseinrichtung um eine Signalleitung.

Gemäß einer Ausführungsform weist die erste Leitungseinrichtung und/oder die zweite Leitungseinrichtung wenigstens eine optische Faser, insbesondere wenigstens eine Glasfaser, auf. Glasfaserleitungen sind insbesondere Kabel für die Signalübertragung. Sie setzen sich beispielsweise aus vielen einzelnen Glasfasern zusammen, die aus Quarzglas als Übertragungsmedium bestehen können, und die einen Lichtwellenleiter bilden können. Glasfaserleitungen übertragen Lichtsignale über weite Strecken mit Lichtgeschwindigkeit und enormer Datenkapazität.

Gemäß einer Ausführungsform weist der Rotationskörper Bereiche mit unterschiedlichem Reflexionsgrad auf. Ein solcher Rotationskörper kommt insbesondere im Zusammenhang mit einer optischen Erfassungseinrichtung zum Einsatz. Das bedeutet insbesondere, dass sich auf der Oberfläche des Rotationskörpers Bereiche mit unterschiedlichem Reflexionsgrad befinden. Der Reflexionsgrad ist das Verhältnis zwischen einfallender Intensität der optischen Strahlung und der reflektierten Intensität der optischen Strahlung. Der Rotationskörper weist gemäß einer Ausführungsform Bereiche mit starker Reflexion und Bereiche mit weniger starker Reflexion auf. Die Bereiche mit starker Reflexion haben einen hohen Reflexionsgrad, der zu Unterscheidungszwecken als erster Reflexionsgrad bezeichnet wird. Die Bereiche mit weniger starker Reflexion haben einen geringeren Reflexionsgrad, der zu Unterscheidungszwecken als zweiter Reflexionsgrad bezeichnet wird. Die Bereiche mit unterschiedlicher Reflexion bilden gemäß einer Ausführungsform ein Muster auf der Oberfläche des Rotationskörpers. Über eine Mustererkennung wird ein Triggerpunkt für die Bestimmung der Rotationsfrequenz gesetzt. Durch die Verwendung von Bereichen mit unterschiedlichem Reflexionsgrad kann beispielsweise ein periodisches Signal erzeugt werden. Beispielsweise kann auch die Anzahl an entstehenden Signalen während einer Umdrehung des Rotationskörpers erhöht werden. Damit erhöht sich die Menge an Informationen.

Gemäß einer Ausführungsform besteht der Rotationskörper aus Edelstahl. Edelstahl ermöglicht einen hohen, ersten Reflexionsgrad. Auf der Oberfläche des Rotationskörpers werden einzelne Bereiche mit einem Material eingefärbt, beschichtet, oder sie werden entsprechend bearbeitet, so dass sie im Vergleich zum ersten Reflexionsgrad einen zweiten, geringeren Reflexionsgrad aufweisen. Beispielsweise kann dies durch eine schwarze Beschichtung oder Einfärbung erreicht werden. Bei einer erfindungsgemäßen Rotationsfrequenz von weniger als 400 Hz können für den Rotationskörper auch andere Materialien verwendet werden, beispielsweise Stahlkugeln oder Chromkugeln.

Trifft die optische Strahlung auf einen Bereich mit dem ersten Reflexionsgrad, ist die Reflexion entsprechend hoch, ebenso wie das Reflexionssignal, das an den optischen Detektor zurücktransportiert wird. Trifft die optische Strahlung auf einen Bereich mit dem zweiten Reflexionsgrad, ist die Reflexion entsprechend geringer, ebenso wie das Reflexionssignal, das an den optischen Detektor zurücktransportiert wird. Während eines Rotationsumlaufs des Rotationskörpers trifft die optische Strahlung abwechselnd auf Bereiche mit erstem und zweitem Reflexionsgrad auf.

Die Bereiche mit erstem und zweitem Reflexionsgrad sind insbesondere in Form eines definierten Musters und/oder in einer definierten Abfolge auf der Oberfläche des Rotationskörpers bereitgestellt.

Gemäß einer Ausführungsform sind die Bereiche mit unterschiedlichem Reflexionsgrad in Form von Flächen oder Flecken gleichmäßig verteilt auf der Oberfläche des Rotationskörpers bereitgestellt. Die Flächen oder Flecken können rund, oval, mehreckig oder dergleichen sein. Beispielsweise weist der Rotationskörper ein Grundmaterial mit einem ersten Reflexionsgrad auf. Über den Umfang gleichmäßig verteilt sind dann Flächen oder Flecken mit einem zweiten Reflexionsgrad bereitgestellt, wobei sich diese Flächen oder Flecken nicht direkt berühren. Bei dieser Ausführungsform ist es egal, wie der Rotationskörper in der Druckmesseinrichtung orientiert ist. Während der Rotation wird eine auf den Rotationskörper auftreffende optische Strahlung immer Bereiche mit erstem und zweitem Reflexionsgrad durchlaufen.

Gemäß einer anderen Ausführungsform sind die Bereiche mit unterschiedlichem Reflexionsgrad in Form von Streifen bereitgestellt. Die Streifen erstrecken sich insbesondere in vertikaler Richtung, wenn der Rotationskörper ordnungsgemäß in der Druckmesseinrichtung aufgehängt ist. Während der Rotation des Rotationskörpers durchläuft die optische Strahlung abwechselnd immer einen Streifen mit erstem Reflexionsgrad und einen Streifen mit zweitem Reflexionsgrad.

Bei dem letztgenannten Ausführungsbeispiel könnte es zu Problemen kommen, beispielsweise wenn der Rotationskörper in der Druckmesseinrichtung falsch aufgehängt, das heißt falsch orientiert ist. Bei einer falschen Orientierung könnte beispielsweise der Fall auftreten, dass sich die Streifen in einer horizontalen Richtung erstrecken. Im schlechtesten Fall würde die optische Strahlung während einer Rotation des Rotationskörpers dann nur auf einen Streifen mit einem der Reflexionsgrade auftreffen.

Um dieses Problem zu vermeiden, weist der Rotationskörper gemäß einer Ausführungsform eine Erzwingungseinrichtung auf, die zur Erzwingung einer definierten Ausrichtung des Rotationskörpers eingerichtet ist. Durch die Erzwingungseinrichtung wird der Rotationskörper in die für eine ordnungsgemäße Messung erforderliche Orientierung gezwungen. Bei der Erzwingungseinrichtung handelt es sich gemäß einer Ausführungsform um ein Magnetelement, das an/in dem Rotationskörper bereitgestellt ist. Beispielsweise weist der Rotationskörper dazu eine Bohrung auf, in der das Magnetelement eingelassen ist. Das Magnetelement steht in Wechselwirkung mit anderen Magnetelementen der Druckmesseinrichtung, so dass der Rotationskörper immer die richtige Orientierung hat. Gemäß einer Ausführungsform wird die Erzwingungseinrichtung dadurch realisiert, dass der Rotationskörper mechanisch bearbeitet oder modifiziert wird. Auf diese Weise weist der Rotationskörper eine Vorzugsrichtung auf und die Orientierung ist aufgrund der physikalischen Zusammenwirkungen vorbestimmt. Gemäß einer Ausführungsform wird die Erzwingungseinrichtung durch Komponenten der Druckmesseinrichtung, etwa durch Aktuatoren, beispielsweise Spulen, bereitgestellt. Durch Aktuatoren, die insbesondere zur Regelung der Druckmesseinrichtung bereitgestellt sind, wird der Rotationskörper in einer Zwangsorientierung, beispielsweise in einer vertikalen Orientierung gehalten.

Gemäß einer Ausführungsform weist die Druckmessvorrichtung eine Steuereinrichtung auf. Die Erzeugungseinrichtung zur Erzeugung einer Rotationsfrequenz des Rotationskörpers und/oder die Erfassungseinrichtung zur Erfassung/Bestimmung charakteristischer Eigenschaften der Druckmesseinrichtung ist/sind mit der Steuereinrichtung signaltechnisch verbunden oder wirkt/wirken mit dieser zusammen. Die Steuereinrichtung ist zur Bestimmung von Druckwerten anhand empfangener charakteristischer Eigenschaften der Druckmesseinrichtung eingerichtet.

Bei der Steuereinrichtung handelt es sich insbesondere um eine Elektronikeinrichtung. Die Steuereinrichtung kann in Form von Hardwarekomponenten oder Softwarekomponenten, oder als eine Kombination daraus, ausgebildet sein. Insbesondere weist die Steuereinrichtung eine Prozessoreinrichtung auf, in der auch zumindest Teile des erfindungsgemäßen Verfahrens gemäß dem zweiten Aspekt der Erfindung ablaufen. Die Steuereinrichtung steht bevorzugt über die oben beschriebenen Leitungseinrichtungen mit der Druckmesseinrichtung in Kontakt, beispielsweise über geeignete Schnittstellen.

Die Erzeugungseinrichtung zur Erzeugung einer Rotationsfrequenz des Rotationskörper ist gemäß einer Ausführungsform mit der Steuereinrichtung verbunden oder wirkt mit der Steuereinrichtung zusammen. In der Steuereinrichtung wird dann ein Signal erzeugt und zur Erzeugungseinrichtung, beispielsweise zum Antrieb, übertragen, die/der den Rotationskörper veranlasst, mit der erfindungsgemäßen Rotationsfrequenz von kleiner 400 Hz zu rotieren. Zudem wird in der Steuereinrichtung ein Signal erzeugt und zur Erzeugungseinrichtung, beispielsweise zum Antrieb, übertragen, das zum Beginn eines Druckmessvorgangs den Antrieb abschaltet.

Die, insbesondere optische, Erfassungseinrichtung ist gemäß einer Ausführungsform mit der Steuereinrichtung verbunden oder wirkt mit der Steuereinrichtung zusammen. Gemäß einer Ausführungsform ist dies zumindest für den optischen Detektor der Fall. Gemäß einer bevorzugten Ausführungsform ist die Steuereinrichtung ein zur Druckmesseinrichtung, insbesondere zum optischen Detektor, externes Bauteil, welches dann über die Schnittstellen und die Leitungseinrichtungen mit der Druckmesseinrichtung zumindest zeitweilig, beispielsweise drahtlos oder drahtgebunden, verbunden ist und kommuniziert. Gemäß einer anderen Ausführungsform ist die Steuereinrichtung Bestandteil der optischen Einrichtung. Gemäß einer Ausführungsform ist die Steuereinrichtung Bestandteil des optischen Detektors, oder umgekehrt.

Gemäß einer Ausführungsform ist der optische Detektor oder die Steuereinrichtung eingerichtet, um ein Oberflächenprofil des Rotationskörpers auf Basis von vom Rotationskörper reflektierter optischer Strahlung zu erzeugen. Somit wird das Oberflächenprofil insbesondere auf Basis von im optischen Detektor empfangener optischer Strahlung erzeugt. In einem solchen Fall kann der Rotationskörper ohne Bereiche mit unterschiedlichem Reflexionsgrad bereitgestellt sein und ohne aufgebrachte unterschiedliche Reflexionsgrade optisch abgetastet werden. Ein Rotationskörper, der beispielsweise aus Edelmetall besteht, hat eine endliche, einzigartige Rauigkeit. Dadurch ist es möglich, mit Hilfe der optischen Einrichtung, insbesondere mit Hilfe des optischen Emitters und/oder des optischen Detektors, ein Oberflächenprofil des Rotationskörpers auf Basis der Reflexionen zu erstellen. Das Oberflächenprofil weißt an einem Punkt immer einen spitzen Ausschlag, einen so genannten Peak, auf, der aufgrund stark reflektierter Strahlung entsteht. Auf diesen Punkt wird "getriggert". Das heißt, er wird als Referenzpunkt beziehungsweise als Nullpunktdurchgang verwendet. Bei jeder vollen Umdrehung des Rotationskörpers tritt dann einmal dieser Nulldurchgang auf. Dadurch lässt sich die gleiche Statistik wie bei der induktiven Lösung erreichen, allerdings ein besseres Signal-Rausch-Verhältnis erzielen. Auch kann die Statistik erhöht werden, falls mehrere solcher Peaks auftreten, getriggert und verwendet werden. Die Orientierung des Rotationskörpers ist bei dieser Ausführungsform nicht von Bedeutung. Es wird vor Messbeginn, etwa wenn sich der Rotationskörper in Rotation und Schwebe befindet, das Oberflächenprofil bestimmt und ein Peak als Referenzpunkt gewählt. Dieses Verfahren kann auch als eine Art "Kalibration" verstanden werden.

Gemäß einer Ausführungsform ist der optische Detektor oder die Steuereinrichtung eingerichtet, um wenigstens ein elektrisches Signal auf Basis von im optischen Detektor empfangener optischer Strahlung oder vom Oberflächenprofil des Rotationskörpers zu erzeugen. In dem optischen Detektor oder in der Steuereinrichtung wird aus der empfangenen optischen Strahlung somit ein elektrisches Signal erzeugt.

Gemäß einer Ausführungsform erfolgt die Erzeugung des elektrischen Signals in dem optischen Detektor. Gemäß einer anderen Ausführungsform empfängt der optische Detektor die vom Rotationskörper reflektierte optische Strahlung und leitet diese an die Steuereinrichtung weiter. Die Erzeugung des elektrischen Signals erfolgt dann in der Steuereinrichtung. Das elektrisches Signal kann beispielsweise ein digitales Signal sein. "1" könnte dann für eine Reflexion mit erstem Reflexionsgrad stehen, während "0" für eine Reflexion mit zweitem Reflexionsgrad steht. Das elektrische Signal kann beispielsweise auch ein analoges Signal sein und beispielsweise einen sinusförmigen Verlauf haben.

Die Erzeugung des elektrischen Signals ist gemäß einer Ausführungsform wie folgt: Die optische Strahlung trifft auf dem Rotationskörper auf und wird von diesem, gemäß einer Ausführungsform entweder mit erstem oder zweitem Reflexionsgrad, oder gemäß einer Ausführungsform aufgrund des Oberflächenprofils mit dem Peak, mehr oder weniger stark, reflektiert. Die reflektierte optische Strahlung wird anschließend vom optischen Detektor empfangen. Entweder im optischen Detektor, oder in der Steuereinrichtung wird aus dem reflektierten optischen Signal dann ein elektrisches Signal erzeugt. Wegen der unterschiedlichen Reflexionsgrade, oder aufgrund des Oberflächenprofils mit dem Peak, während der Rotation des Rotationskörpers ist das reflektierte optische Signal unterschiedlich stark beziehungsweise intensiv, so dass auch das erzeugte elektrische Signal während der Rotation des Rotationskörpers entsprechend unterschiedlich stark ist. Dieser Signalverlauf über die Rotationszeit des Rotationskörpers kann digital oder analog abgebildet werden.

Bei dem elektrischen Signal handelt es sich um eine Art Rohsignal, welches anschließend weiterverarbeitet wird, beispielsweise zu Druckwerten.

Gemäß einer Ausführungsform weist die Steuereinrichtung eine Druckbestimmungseinrichtung auf, die zur Bestimmung von Druckwerten anhand erfasster/bestimmter charakteristischer Eigenschaften der Druckmesseinrichtung eingerichtet ist. In der Druckbestimmungseinrichtung, die beispielsweise einen Prozessor aufweist, wird aus dem elektrischen Signal ein Druck errechnet beispielsweise durch einen Algorithmus. In der Steuereinrichtung werden somit aus dem elektrischen Signal Druckwerte bestimmt. Die Druckwerte können, insbesondere über große Distanzen, anschließend weiter transportiert werden.

Gemäß einer Ausführungsform ist die Steuereinrichtung beabstandet zur Druckmesseinrichtung bereitgestellt. Das heißt, die Steuereinrichtung und die Druckmesseinrichtung sind räumlich getrennt. Dieser räumliche Abstand kann im Bereich zwischen einigen Zentimetern bis zu mehreren Metern betragen. Da nunmehr eine optische Einrichtung zur Erfassung/Breitstellung charakteristischer Werte der Druckmesseinrichtung, beispielsweise der Rotationsfrequenz des Rotationskörpers, zum Einsatz kommt, können die optischen Signale problemlos auch über große Distanzen transportiert werden, wie weiter oben schon erläutert worden ist. Es ist deshalb auch problemlos möglich, dass sich die Steuereinrichtung in einem Abstand größer 10m, vorzugsweise größer 100m, von der Druckmesseinrichtung, insbesondere von dem Prüfobjekt, etwa dem Rotationskörper, befinden kann. Die Erfindung ist nicht auf bestimmte Abstandswerte beschränkt. Mit der optischen Einrichtung lassen sich im Vergleich zu einer induktiven Einrichtung stärkere Signale, beispielsweise1000x stärkere Signale, erzeugen. Die Druckmesseinrichtung, beispielsweise der Drucksensor, befindet sich dann in der Nähe des Druckmessorts, beispielsweise einer Vakuumkammer. Die empfindliche Steuereinrichtung, etwa die Elektronik, befindet sich dann in sicherer Entfernung. Zwischen der Druckmesseinrichtung, insbesondere zwischen dem Rotationskörper, und der Steuereinrichtung kann eine große Distanz, beispielsweise 100m oder mehr, liegen. Natürlich ist es auch möglich, dass sich die Steuereinrichtung in unmittelbarer Nähe zur Druckmesseinrichtung befindet, oder gar Bestanteil der Druckmesseinrichtung ist. Denn die optische Einrichtung ist beispielsweise unempfindlich gegenüber elektromagnetischen Feldern.

Das auf Basis von optischer Strahlung, insbesondere von Licht, arbeitende Signal kann man problemlos verstärken und von der Druckmesseinrichtung entkoppeln, da das Signal über Signalleitungen, insbesondere die Leitungseinrichtungen, optisch transportiert werden kann.

Gemäß dem zweiten Aspekt der Erfindung ein Verfahren bereitgestellt, welches die Merkmale des unabhängigen Patentanspruchs 11 aufweist.

Das Verfahren dient zur Druckmessung und wird unter Verwendung einer Druckmessvorrichtung durchgeführt, aufweisend eine Druckmesseinrichtung, welche einen Rotationskörper aufweist, sowie weiterhin aufweisend eine Einrichtung zur Erzeugung einer Rotation des Rotationskörpers mit einer definierten Rotationsfrequenz. Das Verfahren wird insbesondere unter Verwendung einer Druckmessvorrichtung gemäß dem ersten Aspekt der Erfindung durchgeführt. Zur Ausgestaltung und zur Funktionsweise des erfindungsgemäßen Verfahrens wird zur Vermeidung von Wiederholungen deshalb vollinhaltlich auch auf die Ausführungen zum ersten Erfindungsaspekt Bezug genommen und verwiesen.

Das Verfahren ist durch folgende Schritte gekennzeichnet:
a) Über eine Erzeugungseinrichtung zur Erzeugung einer Rotation des Rotationskörpers mit einer definierten Rotationsfrequenz, wird eine Rotation des Rotationskörpers mit einem Rotationsfrequenzbereich von kleiner 400 Hz erzeugt. Das heißt, die Erzeugungseinrichtung bewirkt, dass der Rotationskörper mit einer Rotationsfrequenz von weniger als 400 Hz rotiert wird.
b) In einem sich anschließenden Schritt erfolgt ein Abschalten der Erzeugungseinrichtung.
c) Anschließend erfolgt eine Erfassung der Abnahme der Rotationsgeschwindigkeit des Rotationsköpers, und insbesondere eine Bestimmung der Abbremsrate des Rotationskörpers. Das kann beispielsweise in einem optischen Detektor oder in einer Steuereinrichtung erfolgen. Oder es wird ein induktives Signal und dessen Verlauf erfasst.
d) Aus der Abnahme der Rotationsgeschwindigkeit des Rotationsköpers, insbesondere aus der Abbremsrate des Rotationskörpers, erfolgt ein Bestimmen von Druckwerten. Das erfolgt bevorzugt in der Steuereinrichtung.

Gemäß einer Ausführungsform werden in einer Steuereinrichtung anhand der empfangenen optischen Strahlung, beispielsweise aus daraus erzeugten elektrischen Signalen, oder anhand empfangener induktiver Signale, beispielsweise aus daraus erzeugten elektrischen Signalen, Druckwerte bestimmt.

Gemäß einer Ausführungsform weist die Druckmessvorrichtung eine optische Erfassungseinrichtung zur Erfassung der Rotationsfrequenz des Rotationskörpers mit einem optischen Emitter und einem optischen Detektor auf, wobei das Verfahren zur Erzeugung von Druckmesswerten folgende Schritte aufweist:
i) Von dem optischen Emitter wird optische Strahlung emittiert, zum Rotationskörper transportiert und vom Rotationskörper zumindest teilweise reflektiert;
ii) Die vom Rotationskörper empfangene reflektierte optische Strahlung wird in dem optischen Detektor empfangen;
iii) In dem optischen Detektor oder in einer Auswerteeinrichtung wird aus der empfangenen optischen Strahlung eine Abnahme der Rotationsgeschwindigkeit des Rotationsköpers erfasst, und insbesondere die Abbremsrate des Rotationskörpers bestimmt.

Aus den charakteristischen Werten können Aussagen zu der Druckmesseinrichtung getroffen werden. Beispielsweise wird aufgrund der Rotationsfrequenz der am Ort des Rotationskörpers herrschende Druck ermittelt, der in einer mit der Druckmesseinrichtung verbundenen Kammer vorherrscht.

Gemäß einer Ausführungsform werden dazu in der Steuereinrichtung, beispielsweise in der Druckbestimmungseinrichtung, anhand empfangener charakteristischer Eigenschaften der Druckmesseinrichtung Druckwerte bestimmt.

Dazu wird gemäß einer Ausführungsform, wie auch im Zusammenhang mit der Druckmessvorrichtung gemäß dem ersten Aspekt der Erfindung weiter oben beschrieben ist, in dem optischen Detektor oder in der Steuereinrichtung aus der empfangenen optischen Strahlung, oder auf Basis des Oberflächenprofils des Rotationskörpers, ein elektrisches Signal erzeugt. In der Steuereinrichtung werden gemäß einer Ausführungsform aus dem elektrischen Signal Druckwerte bestimmt, beispielsweise durch Berechnung mittels eines geeigneten Algorithmus.

Die Erfindung wird nun anhand einiger Ausführungsbeispiele unter Bezugnahme auf die beiliegenden Zeichnungen näher erläutert. Es zeigen
- Figur 1: in schematischer Ansicht eine Druckmessvorrichtung, die eine als Gasreibungsmanometer ausgebildete Druckmesseinrichtung aufweist;
- Figur 2: ein Ausführungsbeispiel einer Druckmesseinrichtung in Form eines Gasreibungsmanometers, bei der die Rotationsfrequenz des Rotationskörpers induktiv erfasst wird;
- Figur 3: ein Ausführungsbeispiel einer Druckmesseinrichtung in Form eines Gasreibungsmanometers, bei der die Rotationsfrequenz des Rotationskörpers optisch erfasst wird;
- Figur 4: ein Ausführungsbeispiel eines Rotationskörpers der Druckmesseinrichtung;
- Figur 5: ein weiteres Ausführungsbeispiel eines Rotationskörpers der Druckmesseinrichtung; und
- Figur 6: ein Ausführungsbeispiel eines Messrohrs der Druckmesseinrichtung.

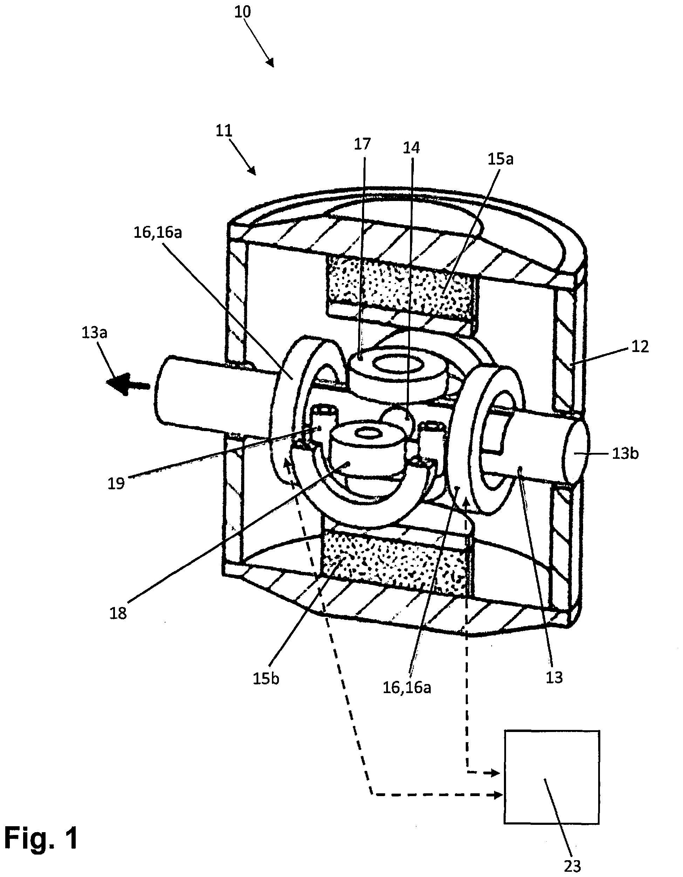

In Figur 1 ist in schematischer Ansicht eine Druckmessvorrichtung 10 dargestellt, die eine als Gasreibungsmanometer 11a ausgebildete Druckmesseinrichtung 11 aufweist.

Die einzelnen Komponenten des Gasreibungsmanometers 11a befinden sich in einem Gehäuse 12. Ein Merkmal des Gasreibungsmanometers 11a wird durch ein Messrohr 13 beziehungsweise Vakuumrohr gebildet, welches an einer Seite ein geschlossenes Ende 13b aufweist, und welches mit seinem anderen Ende mit einem weiteren Bauteil, beispielsweise einer - nicht dargestellten - Vakuumkammer, verbunden ist. Die Anschlussrichtung ist hier durch den Pfeil 13a dargestellt. In dem Messrohr 13 ist ein Rotationskörper 14 gelagert.

Das Gasreibungsmanometer 11a weist ein Magnet- und Spulensystem auf. In Figur 1 sind beispielhaft Permanentmagnete 15a, 15b, sowie Antriebsspulen 16a, Schwebe/Stabilisierungsspulen 17, Geschwindigkeitserfassungsspulen 18 und Schwingungsdämpfungsspulen 19 dargestellt. Die Antriebsspulen 16a sind Bestandteil einer Einrichtung 16 zur Erzeugung einer Rotation des Rotationskörpers 14. Die Geschwindigkeitserfassungsspulen 18 erfassen die Rotationsgeschwindigkeit eines Rotationskörpers 14, insbesondere in dessen Abbremsphase.

Der Rotationskörper 14 in Form einer Kugel wird in einem Magnetfeld reibungsfrei gelagert. Das Magnetfeld wird durch die Permanentmagnete 15a, 15b erzeugt. Zum Halten der Höhe wird das Magnetfeld der Permanentmagnete 15a, 15b mit langsam veränderlichem Gleichstrom (Lageregelung) und Hochfrequenz (Impedanzmessung) zur Bestimmung der Höhe überlagert. Horizontal ist der Rotationskörper 14, insbesondere die Kugel, passiv stabilisiert (stabiles Gleichgewicht). Ein äußeres Drehfeld, erzeugt durch die Antriebsspulen 16a, bringt den Rotationskörper 14 zum Rotieren. Erfindungsgemäß wird der Rotationskörper 14 mit einer Rotationsfrequenz von weniger als 400 Hz rotiert. Hierzu werden von einer Steuereinrichtung 23 entsprechende Signale an die Erzeugungseinrichtung 16, beispielsweise die Antriebsspulen 16a, übertragen. Die Antriebsspulen 16a bilden somit den Teil einer Art Antrieb, über den der Rotationskörper in eine Rotation mit der erfindungsgemäßen Rotationsfrequenz von kleiner 400 Hz versetzt wird. Über die Steuereinrichtung 23 wird dieser Antrieb zu Beginn einer eigentlichen Druckmessung dann auch wieder abgeschaltet. Bei der in Figur 1 dargestellten Ausführungsform wird mit einer Geschwindigkeitserfassungsspule 18 die Abnahme der Rotationsgeschwindigkeit des Rotationskörpers 14 gemessen und aus der Reibung die Teilchendichte des Gases ermittelt.

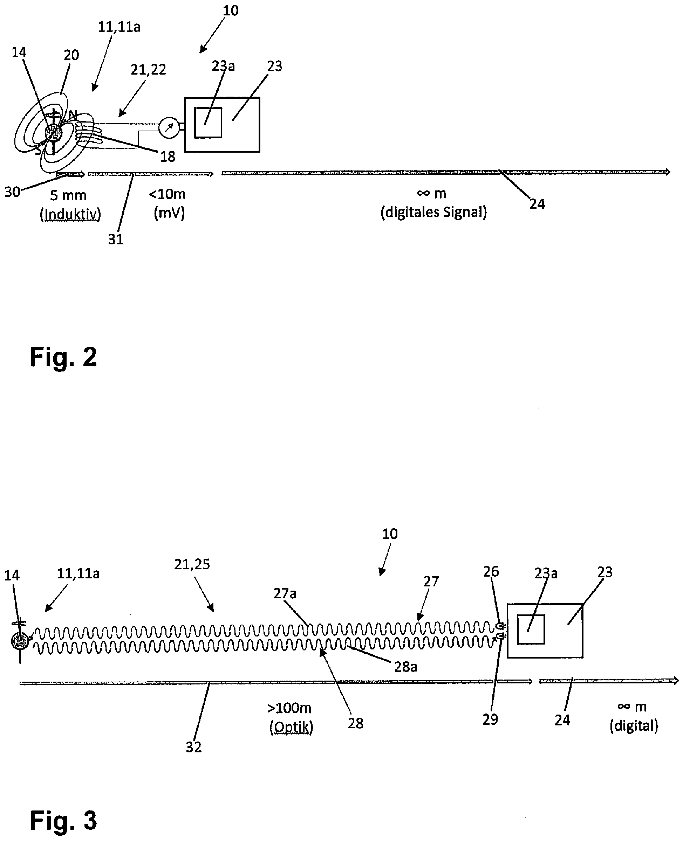

Die Rotationsfrequenz des Rotationskörpers 14 wird gemäß einer Ausführungsform induktiv ermittelt, wie es bei den in Figur 1 und Figur 2 dargestellten Ausführungsbeispielen der Fall ist. Dort kommt hierfür die Geschwindigkeitserfassungsspule 18 zum Einsatz. Der Rotationskörper 14 erzeugt ein Magnetfeld 20, das in eine Einrichtung 21 zur Erfassung/Bestimmung charakteristischer Eigenschaften der Druckmesseinrichtung 11, hier in eine Einrichtung 21 zur Erfassung/Bestimmung der Rotationsfrequenz des Rotationskörpers 14, eingekoppelt wird. Im gezeigten Beispiel ist die Einrichtung 21 als eine induktive Einrichtung 22 ausgebildet, welche wenigstes eine Spule, hier eine Geschwindigkeitserfassungsspule 18, aufweist. Das Magnetfeld 20 wird somit induktiv in eine Spule eingekoppelt. Die Einrichtung 22 in Form der Spule liefert ein elektrisches Signal. Da bei der Erfassung der Drehfrequenzinformationen nur ein Minisignal vorliegt, kann eine Wirkung nur auf kurze Distanz erzeugt werden. Das bedeutet, die induktive Einrichtung 22 zur Bestimmung/Erfassung der Rotationsfrequenz des Rotationskörpers 14 muss sich in unmittelbarer Nähe zum Rotationskörper 14 befinden, um in ein elektrisches Signal zu gelangen. Das ist in Figur 2 durch den Abstand 30 veranschaulicht.

Üblicherweise werden die von der induktiven Einrichtung 22 gelieferten elektrischen Signale zu einer Steuereinrichtung 23 übertragen, die beispielsweise eine Elektronikeinrichtung sein kann. Diese Steuereinrichtung 23 dient dazu, in einer Druckbestimmungseinrichtung 23a aus den erfassten Drehfrequenzinformationen Druckwerte zu errechnen, die dann zur weiteren Verarbeitung, oft über große Strecken, weitertransportiert werden. In Figur 2 ist dieses in der Auswerteeinrichtung 23 erzeugte und anschließend über große Strecken transportierbare Signal durch den Pfeil 24 symbolisiert.

Bei dem in Figur 3 dargestellten Ausführungsbeispiel ist die Einrichtung 21 zur Erfassung/Bestimmung der charakteristischen Eigenschaften, insbesondere der Rotationsfrequenz des Rotationskörpers 14, der Druckmesseinrichtung 11, 11a, als ein optisches System ausgebildet. Das bedeutet, dass die Einrichtung 21 als eine optische Einrichtung 25 zur Erfassung der Rotrationsfrequenz des Rotationskörpers 14 ausgebildet ist.

Die Druckmessvorrichtung 10 weist eine Druckmesseinrichtung 11 mit einem Rotationskörper 14 auf, die beispielsweise als Gasreibungsmanometer 11a ausgebildet ist. Um schädliche Einflüsse aufgrund von starken elektromagnetischen Feldern und Strahlung zu vermieden, die am Ort der Druckmessung vorhanden sein können, ist die Steuereinrichtung 23 in einem großen Abstand zum Rotationskörper 14 angeordnet, beispielsweise in einem Abstand von größer 100m. Das ist in Figur 3 durch den Pfeil 32 dargestellt. Die Steuereinrichtung 23, die beispielsweise eine Elektronikeinrichtung ist, dient wiederum dazu, aus erfassten Drehfrequenzinformationen Druckwertsignale aufzubereiten und zu verstärken, die dann zur weiteren Verarbeitung, oft über große Strecken, weitertransportiert werden. In Figur 3 ist dieses in der Steuereinrichtung 23 erzeugte und anschließend über große Strecken transportierbare Signal durch den Pfeil 24 dargestellt. Die Ermittlung der Druckwerte erfolgt dabei in einer Druckbestimmungseinrichtung 23a, die Bestandteil der Steuereinrichtung 23 ist.

Die Druckmesseinrichtung 11, 11a, beispielsweise der Rotationskörper 14, befindet sich dann in der Nähe des Druckmessorts, beispielsweise einer Vakuumkammer. Die Steuereinrichtung 23, etwa die empfindliche Elektronik, befindet sich dann in sicherer Entfernung. Zwischen der Druckmesseinrichtung 11, 11a, insbesondere zwischen dem Rotationskörper 14, und der Steuereinrichtung 23 kann eine große Distanz, beispielsweise 100m oder mehr, liegen.

Die optische Einrichtung 25 weist einen optischen Emitter 26 auf, der zur Erzeugung und/oder Abstrahlung einer optischen Strahlung 27a bereitgestellt ist. Zu diesem Zweck ist der optische Emitter 26 als eine Strahlungsquelle ausgebildet, oder er weist eine Strahlungsquelle auf. In einer Ausführungsform handelt es sich bei der optischen Strahlung um Licht, so dass der optische Emitter 26 eine Lichtquelle ist oder aufweist. Bei dem optischen Emitter 26 handelt es sich gemäß einer Ausführungsform um eine Lasereinrichtung.

Die optische Strahlung 27a wird vom optischen Emitter 26 über eine erste Leitungseinrichtung 27, die beispielsweise aus Glasfasern besteht, zu dem Rotationskörper 14 transportiert, wo sie auf den Rotationskörper 14 auftrifft.

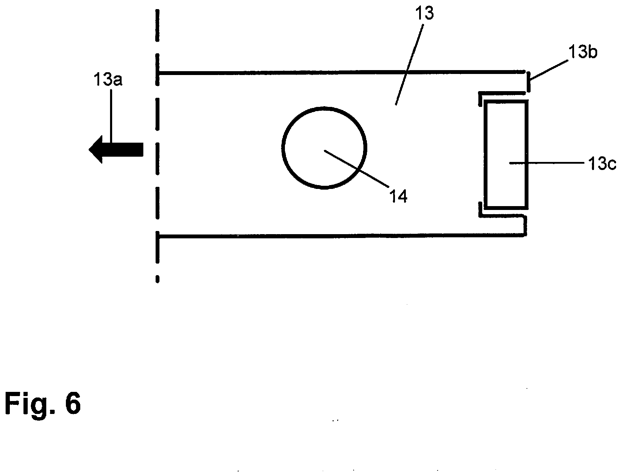

Da sich der Rotationskörper 14 innerhalb des Messrohrs 13 befindet, muss das Messrohr dazu in besonderer Weise ausgebildet sein. Ein Ausführungsbeispiel hierzu ist in Figur 6 dargestellt. Damit die optische Strahlung 27a auf den Rotationskörper 14 innerhalb des Messrohrs 13 auftreffen kann, weist das Messrohr 13 einen für optische Strahlung durchlässigen Bereich 13c auf. Hierbei kann es sich beispielsweis um ein Fenster handeln, welches an dem geschlossenen Ende 13b des Messrohrs 13 bereitgestellt ist. Die optische Strahlung wird über diesen durchlässigen Bereich 13c eingekoppelt. Ebenso wird reflektierte Strahlung über den Bereich 13c ausgekoppelt.

Von dem Rotationskörper 14 wird die optische Strahlung zumindest teilweise reflektiert. Über eine zweite Leitungseinrichtung 28, die beispielsweise aus Glasfasern besteht, wird die vom Rotationskörper 14 reflektierte optische Strahlung 28a zu einem optischen Detektor 29 transportiert. Sowohl der optische Emitter 26 als auch der optische Detektor 29 wirken mit der Steuereinrichtung 23 zusammen und sind im gezeigten Beispiel räumlich im Bereich der Steuereinrichtung 23 bereitgestellt.

In dem optischen Detektor 29, oder aber in der Steuereinrichtung 23 wird aus der reflektierten optischen Strahlung 28a ein elektrisches Signal erzeugt. In einer Druckbestimmungseinrichtung 23a der Steuereinrichtung 23 werden aus den elektrischen Signalen, die zur Rotationsfrequenz des Rotationskörpers 14 korrespondieren, Druckwerte berechnet. Diese Druckwerte werden aufbereitet und gegebenenfalls verstärkt, die dann zur weiteren Verarbeitung, oft über große Strecken, weitertransportiert werden. Dies ist durch den Pfeil 24 verdeutlicht.

Es ist grundsätzlich gewünscht, die Anzahl an entstehenden Signalen während einer Umdrehung des Rotationskörpers 14 zu erhöhen. Denn damit erhöht sich die Menge an Informationen im Vergleich zu einer wie oben beschriebenen induktiven Messung.

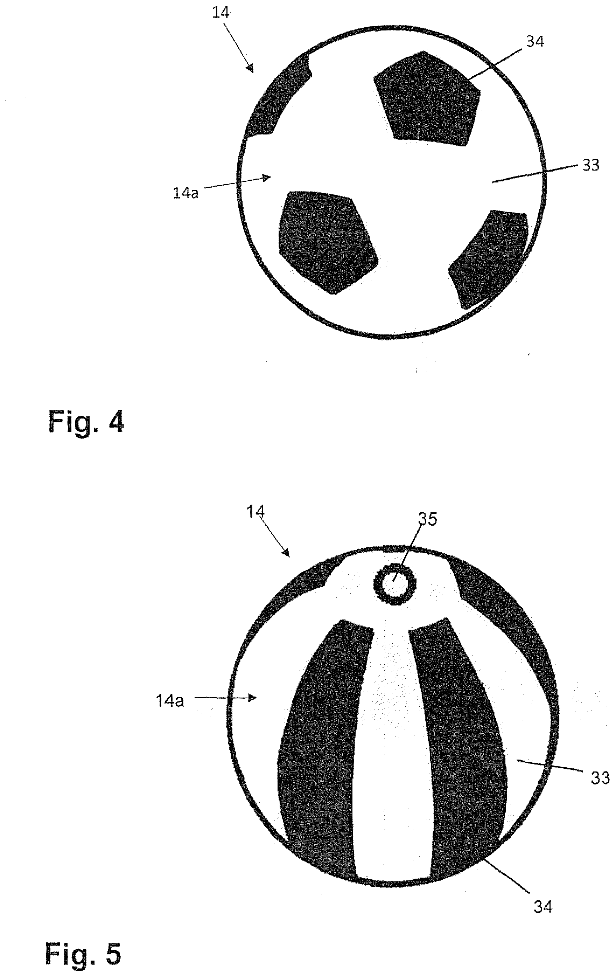

Um dies zu erreichen, weist der Rotationskörper 14 gemäß bevorzugter Ausführungsformen, die in den Figuren 4 und 5 dargestellt sind, Bereiche 33, 34 mit unterschiedlichem Reflexionsgrad auf. Das bedeutet, dass sich auf der Oberfläche 14a des Rotationskörpers 14 Bereiche mit unterschiedlichem Reflexionsgrad befinden. Der Rotationskörper 14 weist somit Bereiche mit starker Reflexion und Bereiche mit weniger starker Reflexion auf. Die Bereiche 33 mit starker Reflexion haben einen hohen Reflexionsgrad, der zu Unterscheidungszwecken als erster Reflexionsgrad bezeichnet wird. Die Bereiche 34 mit weniger starker Reflexion haben einen geringeren Reflexionsgrad, der zu Unterscheidungszwecken als zweiter Reflexionsgrad bezeichnet wird.

Gemäß einer Ausführungsform besteht der Rotationskörper 14 aus Edelstahl. Edelstahl ermöglicht einen hohen, ersten Reflexionsgrad. Auf der Oberfläche 14a des Rotationskörpers 14 werden einzelne Bereiche mit einem Material eingefärbt, beschichtet, oder sie werden entsprechend bearbeitet, so dass sie im Vergleich zum ersten Reflexionsgrad einen zweiten, geringeren Reflexionsgrad aufweisen. Beispielsweise kann dies durch eine schwarze Beschichtung oder Einfärbung erreicht werden. Trifft die optische Strahlung auf einen Bereich mit dem ersten Reflexionsgrad, ist die Reflexion entsprechend hoch, ebenso wie das Reflexionssignal, das an den optischen Detektor zurücktransportiert wird. Trifft die optische Strahlung auf einen Bereich mit dem zweiten Reflexionsgrad, ist die Reflexion entsprechend geringer, ebenso wie das Reflexionssignal, das an den optischen Detektor zurücktransportiert wird. Während eines Rotationsumlaufs des Rotationskörpers trifft die optische Strahlung abwechselnd auf Bereiche mit erstem und zweitem Reflexionsgrad auf.

Die Bereiche 33, 34 mit erstem und zweitem Reflexionsgrad sind insbesondere in Form eines definierten Musters und/oder in einer definierten Abfolge auf der Oberfläche 14a des Rotationskörpers 14 bereitgestellt.

Gemäß einer Ausführungsform, die in Figur 4 dargestellt ist, weist der Rotationskörper 14 ein Grundmaterial mit einem Bereich 33 mit einem ersten, hohen Reflexionsgrad auf. Über den Umfang gleichmäßig verteilt sind dann Bereiche 34 in Form von Flächen oder Flecken mit einem zweiten geringeren Reflexionsgrad bereitgestellt, wobei sich diese Flächen oder Flecken nicht direkt berühren. Bei dieser Ausführungsform ist es egal, wie der Rotationskörper 14 in der Druckmesseinrichtung 11, 11a orientiert ist. Während der Rotation wird eine auf den Rotationskörper 14 auftreffende optische Strahlung abwechselnd immer Bereiche 33, 34 mit erstem und zweitem Reflexionsgrad durchlaufen.

Gemäß einer anderen Ausführungsform, die in Figur 5 dargestellt ist, sind die Bereiche 33, 34 mit unterschiedlichem Reflexionsgrad in Form von Streifen bereitgestellt. Die Streifen erstrecken sich insbesondere in vertikaler Richtung, wenn der Rotationskörper 14 ordnungsgemäß in der Druckmesseinrichtung 11, 11a aufgehängt ist. Während der Rotation des Rotationskörpers 14 durchläuft die optische Strahlung abwechselnd immer einen streifenförmigen Bereich 33 mit erstem Reflexionsgrad und einen streifenförmigen Bereich 34 mit zweitem Reflexionsgrad. Bei diesem Ausführungsbeispiel könnte es zu Problemen kommen, beispielsweise wenn der Rotationskörper 14 in der Druckmesseinrichtung 11, 11a falsch orientiert ist. Bei einer falschen Orientierung könnte beispielsweise der Fall auftreten, dass sich die Streifen in einer horizontalen Richtung erstrecken. Im schlechtesten Fall würde die optische Strahlung während einer Rotation des Rotationskörpers 14 dann nur auf einen Streifen mit einem der Reflexionsgrade auftreffen. Um dieses Problem zu vermeiden, weist der Rotationskörper 14 eine Erzwingungseinrichtung 35 in Form eines Magnetelements auf, die zur Erzwingung einer definierten Ausrichtung des Rotationskörpers 14 eingerichtet ist. Die Erzwingungseinrichtung 35 ist in eine Bohrung im Rotationskörper 14 eingelassen. Die Erzwingungseinrichtung 35 steht in Wechselwirkung mit anderen Magnetelementen der Druckmesseinrichtung 11, 11a, beispielsweise den Permanentmagneten 15a, 15b aus Figur 1, so dass der Rotationskörper 14 immer die richtige Orientierung hat. Natürlich sind auch andere Möglichkeiten der Zwangsorientierung möglich.

Durch die Verwendung von Bereichen 33, 34 mit unterschiedlichem Reflexionsgrad kann die Anzahl an entstehenden Signalen während einer Umdrehung des Rotationskörpers erhöht werden.

Gemäß einer anderen Ausführungsform ist der optische Detektor 29 oder die Steuereinrichtung 23 eingerichtet, um ein Oberflächenprofil des Rotationskörpers 14 auf Basis von vom Rotationskörper 29 reflektierter optischer Strahlung 28a zu erzeugen. In einem solchen Fall kann der Rotationskörper 14 ohne Bereiche 33, 34 mit unterschiedlichem Reflexionsgrad bereitgestellt sein. Der Rotationskörper 14, der beispielsweise aus Edelmetall besteht, hat eine endliche, einzigartige Rauigkeit. Dadurch ist es möglich, mit Hilfe der optischen Einrichtung 25, insbesondere mit Hilfe des optischen Detektors 29, ein Oberflächenprofil des Rotationskörpers 14a auf Basis der Reflexionen zu erstellen. Das Oberflächenprofil weißt an einem Punkt immer einen spitzen Ausschlag, einen so genannten Peak, auf, der aufgrund stark reflektierter Strahlung entsteht. Auf diesen Punkt wird "getriggert". Das heißt, er wird als Referenzpunkt beziehungsweise als Nullpunktdurchgang verwendet. Bei jeder vollen Umdrehung des Rotationskörpers 14 tritt dann einmal dieser Peak auf.

### Bezugszeichenliste

- 10: Druckmessvorrichtung
- 11: Druckmesseinrichtung
- 11a: Gasreibungsmanometer
- 12: Gehäuse
- 13: Messrohr (Vakuumrohr)
- 13a: Anschlussrichtung zu einem Bauteil
- 13b: Geschlossenes Ende des Messrohrs
- 13c: Für optische Strahlung durchlässiger Bereich des Messrohrs
- 14: Rotationskörper (Kugel)
- 14a: Oberfläche des Rotationskörpers
- 15a: Permanentmagnet
- 15b: Permanentmagnet
- 16: Einrichtung zur Erzeugung einer Rotation des Rotationskörpers (Erzeugungseinrichtung)
- 16a: Antriebsspule
- 17: Schwebe-/Stabilisierungsspule
- 18: Geschwindigkeitserfassungsspule
- 19: Schwingungsdämpfungsspule
- 20: Magnetfeld
- 21: Einrichtung zur Erfassung/Bestimmung charakteristischer Eigenschaften der Druckmesseinrichtung (Erfassungseinrichtung)
- 21a: Einrichtung zur Erfassung/Bestimmung der Rotationsfrequenz des Rotationskörpers (Erfassungseinrichtung)
- 22: Induktive Einrichtung zur Erfassung/Bestimmung der Rotationsfrequenz des Rotationskörpers
- 23: Steuereinrichtung (Elektronikeinrichtung)
- 23a: Druckbestimmungseinrichtung
- 24: Elektrisches oder digitales Signal
- 25: Optische Einrichtung zur Erfassung/Bestimmung der Rotationsfrequenz des Rotationskörpers
- 26: Optischer Emitter
- 27: Erste Leitungseinrichtung zur Übertragung optischer Strahlung
- 27a: Optische Strahlung
- 28: Zweite Leitungseinrichtung zur Übertragung optischer Strahlung
- 28a: Optische Strahlung
- 29: Optischer Detektor
- 30: Abstand Rotationskörper zu der induktiven Einrichtung
- 31: Abstand der induktiven Einrichtung zur Auswerteeinrichtung
- 32: Abstand vom Rotationskörper zur Auswerteeinrichtung
- 33: Bereich des Rotationskörpers mit erstem Reflexionsgrad
- 34: Bereich des Rotationskörpers mit zweitem Reflexionsgrad
- 35: Erzwingungseinrichtung (Magnetelement)

## Patentansprüche

1. Druckmessvorrichtung (10), aufweisend eine Druckmesseinrichtung (11), welche einen Rotationskörper (14) aufweist, sowie weiterhin aufweisend eine Einrichtung (16) zur Erzeugung einer Rotation des Rotationskörpers (14) mit einem definierten Rotationsfrequenzbereich, **dadurch gekennzeichnet, dass** die Erzeugungseinrichtung (16) als Einrichtung zur Erzeugung einer Rotation des Rotationskörpers (14) mit einem Rotationsfrequenzbereich von kleiner 400 Hz bereitgestellt ist.

2. Druckmessvorrichtung nach Anspruch 1, **dadurch gekennzeichnet, dass** die Druckmessvorrichtung (10) eine, insbesondere optische oder induktive, Einrichtung (21) zur Erfassung/Bestimmung charakteristischer Eigenschaften der Druckmesseinrichtung (11) aufweist.

3. Druckmessvorrichtung nach Anspruch 2, **dadurch gekennzeichnet, dass** die Erfassungseinrichtung (21) zur Erfassung/Bestimmung charakteristischer Eigenschaften der Druckmesseinrichtung (11) als optische Erfassungseinrichtung (25) zur Erfassung der Rotationsfrequenz des Rotationskörpers (14) ausgebildet ist.

4. Druckmessvorrichtung nach einem der Ansprüche 1 bis 3, **dadurch gekennzeichnet, dass** die Druckmesseinrichtung (11) in Form eines Gasreibungsmanometers (11a) ausgebildet ist, oder ein Gasreibungsmanometer (11a) aufweist.

5. Druckmessvorrichtung nach einem der Ansprüche 1 bis 4, **dadurch gekennzeichnet, dass** die Druckmesseinrichtung ein Messrohr (13) aufweist, und dass der Rotationskörper (14) innerhalb des Messrohrs (13) bereitgestellt ist.

6. Druckmessvorrichtung nach einem der Ansprüche 2 bis 5, **dadurch gekennzeichnet, dass** die Erfassungseinrichtung (21, 25) zur Erfassung/Bestimmung charakteristischer Eigenschaften der Druckmesseinrichtung (11) einen optischen Emitter (26) aufweist, der insbesondere als Lasereinrichtung ausgebildet ist.

7. Druckmessvorrichtung nach einem der Ansprüche 2 bis 6, **dadurch gekennzeichnet, dass** die Erfassungseinrichtung (21, 25) zur Erfassung/Bestimmung charakteristischer Eigenschaften der Druckmesseinrichtung (11) einen optischen Detektor aufweist.

8. Druckmessvorrichtung nach einem der Ansprüche 1 bis 7, **dadurch gekennzeichnet, dass** der Rotationskörper (14) Bereiche (33, 34) mit unterschiedlichem Reflexionsgrad aufweist.

9. Druckmessvorrichtung nach einem der Ansprüche 1 bis 8, **dadurch gekennzeichnet, dass** der Rotationskörper (14) eine Erzwingungseinrichtung (35) aufweist, die zur Erzwingung einer definierten Ausrichtung des Rotationskörpers (14) ausgebildet ist.

10. Druckmessvorrichtung nach einem der Ansprüche 1 bis 9, **dadurch gekennzeichnet, dass** die Druckmessvorrichtung (10) eine Steuereinrichtung (23) aufweist, dass die Erzeugungseinrichtung (16) zur Erzeugung einer Rotationsfrequenz des Rotationskörpers (14) und/oder die Erfassungseinrichtung (21, 21a, 22, 25) zur Erfassung/Bestimmung charakteristischer Eigenschaften der Druckmesseinrichtung (11) mit der Steuereinrichtung (23) verbunden ist oder zusammenwirkt, und dass die Steuereinrichtung (23) zur Bestimmung von Druckwerten anhand empfangener charakteristischer Eigenschaften der Druckmesseinrichtung (11) eingerichtet ist.

11. Verfahren zur Druckmessung unter Verwendung einer Druckmessvorrichtung (10), aufweisend eine Druckmesseinrichtung (11), welche einen Rotationskörper (14) aufweist, sowie weiterhin aufweisend eine Erzeugungseinrichtung (16) zur Erzeugung einer Rotation des Rotationskörpers (14) mit einer definierten Rotationsfrequenz, insbesondere unter Verwendung einer Druckmessvorrichtung (10) gemäß einem der Ansprüche 1 bis 10, **gekennzeichnet durch** folgende Schritte:
a) über die Erzeugungseinrichtung (16) zur Erzeugung einer Rotation des Rotationskörpers (14) mit einem definierten Rotationsfrequenzbereich, Erzeugen einer Rotation des Rotationskörpers (14) mit einem Rotationsfrequenzbereich von kleiner 400 Hz;
b) Abschalten der Erzeugungseinrichtung (16);
c) Erfassen der Abnahme der Rotationsgeschwindigkeit des Rotationsköpers (14), und insbesondere Bestimmen der Abbremsrate des Rotationskörpers (14);
d) aus der Abnahme der Rotationsgeschwindigkeit des Rotationsköpers (14), insbesondere aus der Abbremsrate des Rotationskörpers (14), Bestimmen von Druckwerten.

12. Verfahren nach Anspruch 11, **dadurch gekennzeichnet, dass** in einer Steuereinrichtung (23) anhand von empfangener optischer Strahlung (28a) Druckwerte bestimmt werden.

13. Verfahren nach Anspruch 11 oder 12, **dadurch gekennzeichnet, dass** die Druckmessvorrichtung (10) eine optische Erfassungseinrichtung (21, 25) zur Erfassung der Rotationsfrequenz des Rotationskörpers (14) mit einem optischen Emitter (26) und einem optischen Detektor (29) aufweist, und dass das Verfahren zur Erzeugung von Druckmesswerten folgende Schritte aufweist:
i) von dem optischen Emitter (26) wird optische Strahlung (27a) emittiert, zum Rotationskörper (14) transportiert und vom Rotationskörper (14) zumindest teilweise reflektiert;
ii) die vom Rotationskörper (14) reflektierte optische Strahlung (28a) wird in dem optischen Detektor (29) empfangen;
iii) in dem optischen Detektor (29) oder in einer Steuereinrichtung (23) wird aus der empfangenen optischen Strahlung (28a) eine Abnahme der Rotationsgeschwindigkeit des Rotationsköpers (14) erfasst, und insbesondere die Abbremsrate des Rotationskörpers (14) bestimmt.

14. Verfahren nach einem der Ansprüche 11 bis 13, **dadurch gekennzeichnet, dass** aus der empfangenen optischen Strahlung (28a), oder auf Basis eines ermittelten Oberflächenprofils des Rotationskörpers (14a), oder aus empfangenen induktiven Messwerten ein elektrisches Signal erzeugt wird, und dass in der Steuereinrichtung (23) aus dem elektrischen Signal Druckwerte bestimmt werden.
